# EUROPEAN PATENT APPLICATION

(11) **EP 4 703 414 A1**
(43) Date of publication of application: **04.03.2026**
(21) Application number: 24196362.8
(22) Date of filing: 26.08.2024
(51) Int. Cl.: C08J 11/04, C08F 8/28, C08F 8/48, C08L 29/14

(54) **PROCESS FOR THE RECYCLING OF POLYVINYL BUTYRAL**

(71) Applicant: Kuraray Europe GmbH, 65795 Hattersheim (DE)
(72) Inventor: Frank, Michael, 55268 Nieder-Olm (DE); Schirra, Dominic, Hofheim am Taunus (DE)
(74) Representative: Janßen, Christian Oliver

(57) **Abstract**

The invention is directed to a process to recycle polyvinyl acetal in a two-step process.

## Description

The invention is directed to a process to recycle polyvinyl acetal in a two-step process.

Films based on plasticized polyvinyl butyral resins such as polyvinyl butyral (PVB) are long known as adhesive film for glass sheets. The chemical recycling of film is a process of significant interest due to the widespread use of PVB in safety glass interlayers, particularly in the automotive and construction industries.

However, the recycling of PVB is challenging for many reasons.

First of all, the recycled PVB usually contains components like plasticizers and other additives of unknown type and in unknown amounts since the interlayers are usually combined from various sources. Additionally, the recycled PVB can be contaminated with other materials such as silicones and glass splinters after the recycling process from the laminated glass.

Moreover, PVB's optical clarity is crucial for its application in safety glass. However, exposure to sunlight and weather conditions can lead to the degradation of these properties, making the recycled material less valuable for the same application.

Thus, recycled PVB is often discarded in landfills due to the lack of efficient recycling methods or finds new applications other than the use in safety glass interlayers. For example, recycled PVB has been investigated as a material for yarn coating in textiles, where it can enhance properties such as abrasion and chemical resistance, or as a binder in paints and coatings.

The current invention addresses these challenges and allows for the production of recycled PVB in superior quality by using a two-step chemical recycling process. The first step involves the reaction of polyvinyl acetal with polyvinyl alcohol in the presence of an acid catalyst. This step is aimed at reducing the degree of acetalization of the to-be-recycled and not water-soluble PVB by transferring acetal groups to the polyvinyl alcohol and thus, allowing the polymer mixture to be present in aqueous solution. The second step involves reacting the product with butyraldehyde and thus, restore the degree of acetalization of the PVB. This two-step process allows for the purification of the polymer mixture, e.g. by filtration, since the polymers are dissolved in an aqueous medium after step one and for the controlled re-acetalization to a uniform degree in the second step.

The advantages of this method are manifold. It offers an environmentally friendly alternative to the disposal of PVB, reduces the demand for virgin materials, and presents a closed-loop lifecycle for PVB products. Furthermore, the process is designed to be energy-efficient, high-throughput and cost-effective, making it an attractive option for recycling facilities and industries that generate PVB waste. Lastly, it can be done in the same chemical plants as the production of virgin PVB without major modifications.

Accordingly, one aspect of the present invention is a process to produce a polyvinyl acetal comprising the following steps:
a) providing a mixture of polyvinyl acetal A with a degree of acetalization of more than 10 wt%, optionally a plasticizer, a polyvinyl alcohol and/or a polyvinyl acetal B, wherein the polyvinyl acetal B has a degree of acetalization of less than 10 wt%, and a catalyst to a reaction vessel in an aqueous medium,
b) reacting the mixture;
c) adding an aldehyde to the mixture and reacting the mixture thus formed, and
d) obtaining a polyvinyl acetal C from the mixture.

The inventive process thus involves a mixture a polyvinyl acetal A with a degree of acetalization of more than 10 wt%. Such polyvinyl acetals are generally not soluble in aqueous medium. Therefore, a polyvinyl alcohol and/or a polyvinyl acetal B with a much lower degree of acetalization are reacted with the polyvinyl acetal A. In this reaction, acetal is being intermolecularly transferred from polyvinyl acetal A to the polyvinyl alcohol and/or a polyvinyl acetal B. The amounts of reagents are being chosen in a way that preferably all polymers are dissolved in the aqueous medium.

"Polyvinyl acetal" is used herein shall denote a single polyvinyl acetal or a mixture of several different polyvinyl acetals. For example, a mixture of different polyvinyl acetals with different degree of polymerization, i.e. different chain length, different amounts of acetate or polyvinyl alcohol, different degree and/or type of acetalization or the like.

The aldehydes used for the production of the polyvinyl acetals can be linear or branched (that is to say of the "n" or "iso" type) containing 2 to 10 carbon atoms, which leads to corresponding linear or branched acetal groups. To this end, n-butyraldehyde is preferably used.

The product of the inventive process, i.e. polyvinyl acetal C preferably contains polyvinyl acetals having a proportion of polyvinyl acetate groups, either identically or differently, of 0 to 10 wt%, preferably 0 to 5.0 wt%, or 0.5 to 2.0 wt% or from 0.1 to 1.0 wt%.

The polyvinyl alcohol content of the polyvinyl acetal C may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The vinyl alcohol content and vinyl acetate content were determined in accordance with DIN ISO 3681 (Acetate content) and DIN ISO 53240 (PVA content). The vinyl acetal content is calculated as the remaining portion from the sum of vinyl alcohol content and vinyl acetate content determined in accordance with DIN ISO 53401/53240.

Especially in case of recycled polyvinyl acetal A it will generally comprise a mixture of different polyvinyl acetals. Preferably, polyvinyl acetal A is a mixture of at least two different polyvinyl acetals. Also preferably, at least part of the polyvinyl acetal A is a recycled material. Such recycled material can be sourced from faulty production of laminated glass, from cut-offs or off-spec material in the production of polyvinyl interlayer film or from so-called "trims" of interlayerfilms obtained during the lamination process. However, more preferably polyvinyl acetal A is material from end-of-life recycling of laminated glass, i.e. from laminated glass that has been used in its intended use, e.g. as windows in vehicles or buildings.

The presence of a plasticizer is optional. In case polyvinyl acetal A is sourced from recycling film material, plasticizer is present in the film and thus, in the process mixture. Generally, no additional plasticizer is added intentionally to the mixture.

The reaction vessel can be any commonly used vessel used for chemical reactions. Preferably, the reaction vessel is a stirred tank, more preferably a continuous stirred-tank reactor.

The aqueous medium is any medium comprising water. Preferably, the aqueous medium consists or essentially consists of water. Alternatively, the aqueous medium further comprises an organic solvent, preferably a solvent miscible with water, including alcohols like methanol, ethanol, isopropanol or n-propanol.

Preferably, the catalyst is an acid. More preferably, the acid is chosen from the group consisting of hydrochloric acid, nitric acid, sulfuric acid, boric acid, a sulphonic acid including methane sulphonic acid, p-toluene sulphonic acid, and mixtures thereof.

Step b) is generally performed at temperatures from 40 to 100 °C, more preferably from 50 to 90 °C and most preferably from 60 to 80 °C.

Preferably, an intermolecular acetal rearrangement process between the polyvinyl acetal A and the polyvinyl alcohol and/or the polyvinyl acetal B occurs until at least 90 wt% of the polyvinyl acetals present in the mixture are in solution in the aqueous medium. More preferably, all polyvinyl acetals present in the mixture are in solution in the aqueous medium. The reaction time of step b) is preferably chosen to allow the acetal rearrangement to be complete and all polyvinyl acetals to be in solution. The reaction time is preferably from 30 min to 6 h, more preferably between 1 and 3 h.

Since most or all of the polyvinyl acetals are in solution after step b), the mixture can be purified, e.g. from residual glass pieces, pieces of rubber or silicon or the like. Thus, the inventive process further comprises a step b1) of purification of the reaction mixture using a chemical purification step including an oxidization and/or using a physical purification step including a filtration step wherein step b1) is performed between step b) and step c).

Also preferably, the mixture in step b) comprises a plasticizer and the plasticizer is removed from the mixture after step b), more preferably the plasticizer is removed from the mixture after step b) by phase separation, extraction or decantation.

Step c) is preferably performed at a temperature of from 0 to 30 °C, more preferably from 5 to 15 °C.

Preferably, polyvinyl acetal C precipitates during step c) since it becomes insoluble in the aqueous mixture due to the higher degree of acetalization and is recovered from the mixture as a solid, e.g. by filtration. The solid product is preferably washed subsequently, more preferably with fresh aqueous medium and/or with water.

In case the polyvinyl acetal A is sourced from laminated glass, the inventive process preferably further comprises a step before step a) of crushing and grinding laminated glass and separating the polyvinyl acetal from the glass of the laminated glass. Also preferably, at least part of the plasticizer present in the interlayer is removed, for example by selective extraction.

Alternatively, controlled heat can weaken the bond between PVB and glass, allowing for easier separation. High-pressure waterjets can also be used to separate PVB from glass. This method is environmentally friendly and can be effective, although it may require significant amounts of water.

Nevertheless, the quality the final laminates produced with the product of the inventive process might still not be on par with laminates obtained with completely virgin material. Thus, it is also preferred to provide the polyvinyl acetal C with at least one dye and/or pigment. The pigment preferably is carbon black, calcium carbonate, or TiO₂.

Examples of plasticizers that are common in this technical field and are known to the person skilled in the art are selected from the group of di-2-ethylhexyl sebacate, 1,2 cyclohexane dicarboxylic acid diisononyl ester, di-2-ethylhexyl adipate, di-2-ethylhexyl phthalate, dioctyl adipate, dihexyl adipate, dibutyl sebacate, di-2-butoxyethyl sebacate, triethyleneglycol-bis-2-ethylhexanoate, triethyleneglycol-bis-n-heptanoate, triethyleneglycol-bis-n-hexanoate, tetraethyleneglycol-bis-n-heptanoate, di-2-butoxyethyl adipate, di-2-butoxyethoxyethyl adipate.

Polyvinyl acetal A also contain the same or different adhesion regulators, such as the alkaline and/or alkaline earth salts of organic acids disclosed in WO 03/033583 A1. Potassium acetate and/or magnesium acetate have proven to be particularly suitable. The alkaline and/or alkaline earth metal salts can be used alone or in combination in an amount from 0 to 1000 ppm, particularly 100 to 500 ppm.

Another aspect of the present invention concerns a polyvinyl acetal obtained by the inventive process.

Yet another aspect of the present invention concerns an interlayer film for laminated glass comprising the polyvinyl acetal obtained with the inventive process, a plasticizer and optionally, a further polyvinyl acetal from virgin material.

Yet another aspect of the present invention concerns the use of the polyvinyl acetal produced in the inventive process for the production of an interlayer film for laminated glass, preferably by melt extrusion in the presence of a plasticizer and optionally, other additives known to the skilled person as well as a further polyvinyl acetal from virgin material.

### Examples

### Example 1

100 parts by weight of a commercially available polyvinyl alcohol with an acetyl content of 0.90 mol%, a degree of hydrolysis (DH) of 99.1 and a viscosity of 25.8 mPas (4 w% solution in water, at 20 °C) were dissolved in 1400 parts by weight of water with heating to 90 °C and subsequently cooled to 20 °C. 99.9 parts by weight of 20% hydrochloric acid as well as 62.5 parts by weight of 40 % p-toluene sulfonic acid were added with stirring at a temperature of 20 °C. 14 parts by weight of a mixture of two PVB grades with a combined DA of 80 wt% and an acetyl content of 1 mol% designated for recycling are added to the solution to form a heterogenous mixture, which was reacted at a temperature between 75 and 90 °C under stirring. After two hours, a solution was formed, which was cooled to around 10 °C. 58.25 parts by weight of n-butyraldehyde were added slowly and the PVB began to precipitate. The mixture was then held at around 10 °C for a further 15 min with stirring, and subsequently heated to around 70 °C and held at this temperature for 90 min. The PVB was separated after cooling to ambient temperature by filtration, washed with water and dried to a solid content of > 99 %. A PVB with a polyvinyl alcohol content of 19.33 % by weight and a polyvinyl acetate content of 0.05 % by weight was obtained.

## Claims

1. A process to produce a polyvinyl acetal comprising the following steps
- a) providing a mixture of
∘ polyvinyl acetal A with a degree of acetalization of more than 10 wt%,
∘ optionally a plasticizer,
∘ a polyvinyl alcohol and/or a polyvinyl acetal B, wherein the polyvinyl acetal B has a degree of acetalization of less than 10 wt%, and
∘ a catalyst
to a reaction vessel in an aqueous medium,
- b) reacting the mixture;
- c) adding an aldehyde to the mixture and reacting the mixture thus formed, and
- d) obtaining a polyvinyl acetal C from the mixture.

2. The process according to claim 1 wherein an intermolecular acetal rearrangement process between the polyvinyl acetal A and the polyvinyl alcohol and/or the polyvinyl acetal B occurs until all polyvinyl acetals present in the mixture are in solution in the aqueous medium.

3. The process according to claim 1 or 2 wherein polyvinyl acetal C precipitates during step c) and is recovered from the mixture as a solid.

4. The process according to any one of the claims above wherein the catalyst is an acid.

5. The process according to claim any one of the claims above wherein the acid is chosen from the group consisting of hydrochloric acid, nitric acid, sulfuric acid, boric acid, a sulphonic acid including methane sulphonic acid p-toluene sulphonic acid, and mixtures thereof.

6. The process according to any one of the claims above wherein the polyvinyl acetal A is a mixture of at least two different polyvinyl acetals.

7. The process according to any one of the claims above wherein the polyvinyl acetal A is a recycled material.

8. The process according to any one of the claims above wherein the polyvinyl acetal A is material from end-of-life recycling of laminated glass.

9. The process according to any one of the claims above further comprising a step b1) purification of the reaction mixture a chemical purification step including an oxidization and/or a physical purification step including a filtration step wherein step b1) is performed between step b) and step c).

10. The process according to any one of the claims above wherein the mixture in step comprises a plasticizer and the plasticizer is removed from the mixture after step b).

11. The process according to claim 10) wherein the plasticizer is removed from the mixture after step b) by phase separation, extraction or decantation.

12. The process according to any one of the claims above wherein polyvinyl acetals A, B, and C are polyvinyl butyral and the aldehyde in step c) is butyraldehyde.

13. The process according to claim 7 or 8 further comprising a step before step a) of crushing and grinding laminated glass and separating the polyvinyl acetal from the glass of the laminated glass.

14. A polyvinyl acetal obtained by a process according to any one of the claims above.

15. An interlayer film for laminated glass comprising the polyvinyl acetal according to claim 14, a plasticizer and optionally, a further polyvinyl acetal from virgin material.
